Europäisches Patentamt

European Patent Office

Office européen des brevets

(19)

(11) Veröffentlichungsnummer : **0 334 112 B1**

(12)

# EUROPÄISCHE PATENTSCHRIFT

(45) Veröffentlichungstag der Patentschrift :
**18.01.95 Patentblatt 95/03**

(51) Int. Cl.$^6$ : **H02P 7/62**

(21) Anmeldenummer : **89104142.8**

(22) Anmeldetag : **08.03.89**

(54) **Pulsumrichtergespeiste Drehfeldmaschine.**

(30) Priorität : **21.03.88 DE 3809446**

(43) Veröffentlichungstag der Anmeldung :
**27.09.89 Patentblatt 89/39**

(45) Bekanntmachung des Hinweises auf die
Patenterteilung :
**18.01.95 Patentblatt 95/03**

(84) Benannte Vertragsstaaten :
**CH DE FR GB IT LI NL SE**

(56) Entgegenhaltungen :
**EP-A- 0 193 067**
**EP-A- 0 263 060**
**DE-A- 3 345 271**
**DE-A- 3 525 421**
**DE-A- 3 616 221**

(73) Patentinhaber : **SIEMENS
AKTIENGESELLSCHAFT
Wittelsbacherplatz 2
D-80333 München (DE)**

(72) Erfinder : **Nerowski, Georg, Dr.
Hans-Sachs-Strasse 26
D-8560 Lauf (DE)**
Erfinder : **Piepenbreier, Bernhard, Dr.
Am Wäldla 2
D-8551 Hemhofen (DE)**
Erfinder : **Tölle, Hans-Jürgen, Dipl.-Ing.
Am Europakanal 36
D-8520 Erlangen (DE)**

**Beschreibung**

Die Erfindung betrifft eine pulsumrichtergespeiste Drehfeldmaschine nach dem Oberbegriff des Anspruchs 1.

Sonderausführungen solcher Drehfeldmaschinen sind permanenterregte Synchronmaschinen. Bei pulsumrichtergesteuerten Maschinen ist z.B. gemäß DE-A-33 45 271 sowie "Jahrbuch der Schiffbautechnischen Gesellschaft 81 (1987)", zur Verbesserung des Wirkungsgrades bei kleiner werdender Drehzahl eine Unterteilung der Wicklung in Teilwicklungen und eine zunehmende Reihenschaltung der einzelnen Teilwicklungen bis hin zur Reihenschaltung aller Teilwicklungen bekannt, wobei die Zahl der aktiven verlustbehafteten Umrichter auf einen einzigen verringerbar ist. Bei höheren Drehzahlen (Nenndrehzahl) und höheren Drehmomenten (Nennmoment) sind dagegen alle Teilwicklungen parallel geschaltet. Die maßgebliche Wicklungsstrangzahl m und die Lochzahl q bleibt dabei aber unverändert.

Durch die gegenüber dem Prioritätstag der Erfindung nachveröffentlichte EP-A-0 263 060 ist eine pulsumrichtergespeiste elektrische Asynchronmaschine mit Kurzschlußläufer bekannt, bei der durch einen nahezu rechteckförmigen Strombelag sowie durch ein ebenfalls nahezu rechteckförmiges Erregerfeld eine möglichst hohe Ausnutzung der Maschine erreicht wird. Eine Regelung zwischen Rechteck und Sinusform sowie eine Serienschaltung von Teilsträngen ist in der EP-A-0 263 060 nicht offenbart.

Der Erfindung liegt die Aufgabe zugrunde, eine Drehfeldmaschine der eingangs genannten Art zu schaffen, die eine optimale Ausnutzung bei jeweils bestmöglichem Wirkungsgrad aufweist und mit minimiertem Betriebsgeräusch sowie kleinen Pendelmomenten betrieben werden kann.

Die Lösung der gestellten Aufgabe für eine hochsträngige Drehfeldmaschine mit ganzzahlig teilbaren Wicklungsstrangzahlen und Ganz- oder Bruchlochwicklungen, deren Einzelphasen durch gesonderte Umrichter oder als System mit mindestens einem Sternpunkt gespeist werden, gelingt durch die kennzeichnenden Merkmale des Anspruchs 1.

Bei Nenndrehzahl $n_N$ wird eine entsprechend hohe rotatorische Spannung induziert, wobei alle m Wicklungsstränge über ihre Umrichter parallel auf das speisende Gleichstromnetz geschaltet sind.

Mit kleiner werdenden Drehzahlen $n < n_N$ sinkt die induzierte Spannung etwa im Verhältnis $n/n_N$ und es werden die über ihre Umrichter parallel am Gleichstromnetz hängenden Wicklungsstränge zunehmend auf Reihenbetrieb umgeschaltet.

Durch diese Umschaltung auf Reihenbetrieb von mehr und mehr Wicklungssträngen nimmt die Wicklungstrangzahl schließlich auf m* ab und entsprechend steigt die aktive Lochzahl auf q* gemäß der Beziehung m . q = m* . q*, so daß sich durch Verminderung der in Betrieb bleibenden Umrichter bei der Umschaltung auf Reihenbetrieb in bekannter Weise geringere Verluste auftreten und damit ein besserer Wirkungsgrad erreicht wird.

Zur zusätzlichen Minderung der Verluste sind zum Schalten der Umrichter verlustarme bistabile Schaltelemente vorteilhaft, deren Ansteuerung zeitlich verschoben erfolgen kann.

Die von der Drehzahlbeeinflussung unabhängige Beeinflussung des Drehmomentes erfolgt durch entsprechende Regelung des Stromverlaufs in jeder Halbwelle, wobei der Maximalwert des Stromes an die zulässige Belastbarkeit der Umrichterbauelemente angepaßt ist.

Bei Nennmoment $M_N$ und bei nur geringfügig kleineren Momenten $M \approx M_N$ wird zur besseren Ausnutzung der Maschine samt Umrichter der Stromverlauf während jeder Halbwelle auf eine beliebige Form mit möglichst gleichbleibender Amplitude (z.B. auf eine Rechteck- oder Trapezform) geregelt, bei dem der niedrige gewählte Maximalstrom entsprechend lang fließt und somit kleiner als bei sinusförmigem Stromverlauf für das Nennmoment bemessen werden kann, so daß geringer belastbare Leistungsbauelemente für die Umrichter verwendet werden können. Mit höherer Strangzahl m ergeben sich bei rechteck- oder trapezförmigem Stromverlauf geringere Pendelmomente und geringere geräuschanregende Radialkräfte.

Mit kleineren Drehmomenten $M < M_N$ kann der Stromverlauf bei vermindertem Maximalstrom sinusförmig sein, was die Geräuschanregung und die Pendelmomente weitgehend eliminiert.

Die Umschaltung von einem zum anderen Stromverlauf und zur Änderung des maximalen Stromwertes in jeder Halbwelle kann durch Beeinflussung des Stromsollwertes stetig oder stufenweise mit minimal einer einzigen Stufe vorgenommen werden.

In der Zeichnung ist eine permanenterregte Synchronmaschine mit m = 6 nicht unterteilten Wicklungssträngen und q = 1 und gesonderter Strangspeisung über Pulsumrichter in Brückenschaltung aus einem Gleichstromnetz vereinfacht dargestellt. Es zeigen:

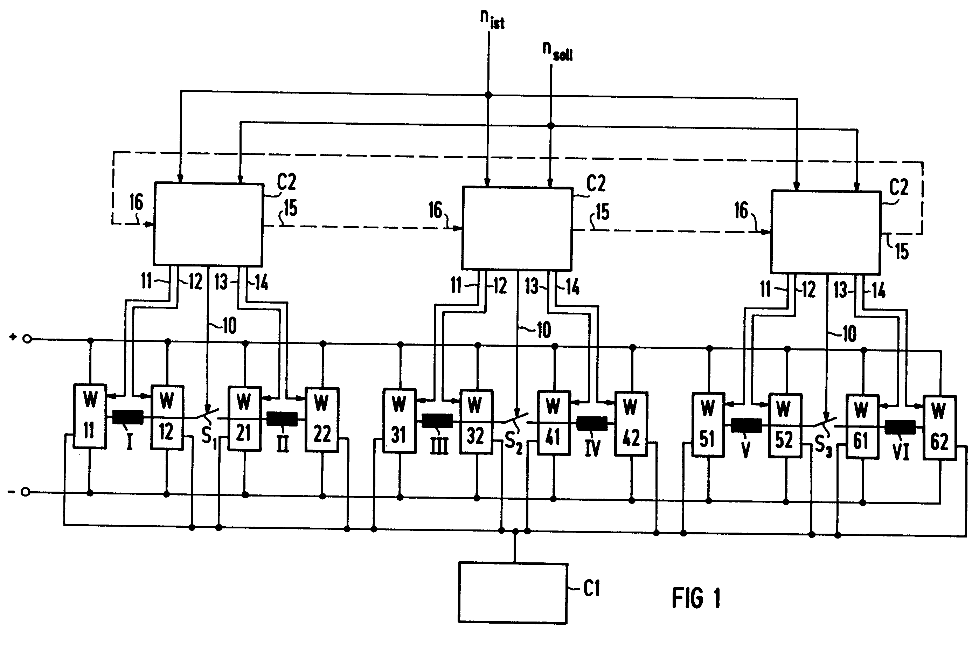

FIG 1                die schematische Verbindung einer Maschinenwicklung ohne Sternpunkt in Einzelphasenspeisung mit den Pulsumrichtern und dem Gleichstromnetz;

FIG 2 und 3       die Lage der magnetischen Achsen bei m = 6 und m* = 3.

An das Gleichstromnetz NE sind über jeweils zwei Halbbrücken W11,W12;W21,W22;W31,W32;W41, W42;W51,W52 und W61,W62 der sechs Pulsumrichter die einzelnen Wicklungsstränge I,II,III,IV,V und VI angeschlossen.

Jeweils zwei Halbbrücken zweier Wicklungsstränge können durch bistabile Schaltelemente S1,S2 bzw. S3 miteinander verbunden werden, so daß sich bei entsprechender Steuerung der einzelnen Brückenteile eine Reihenschaltung jeweils zweier Wicklungsstränge I und II, III und IV bzw. V und VI ergibt.

Bei Schließen aller drei Schaltelemente wird eine halbierte wirksame Strangzahl m* = 3 statt der ursprünglichen Strangzahl m = 6 bei stromsperrenden Schaltelementen S1 bis S3 erreicht.

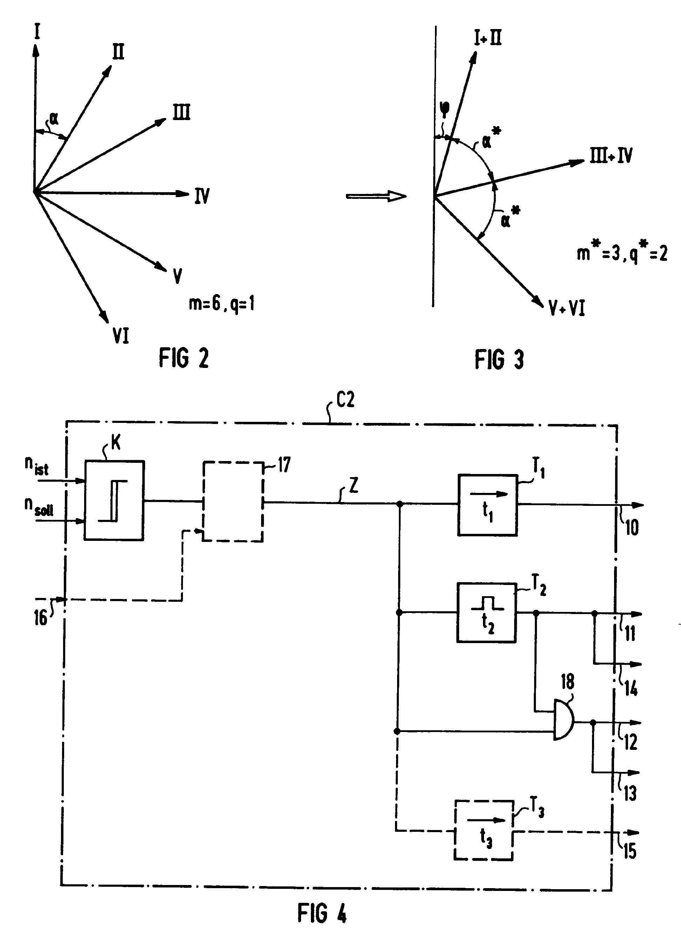

Die Lage der magnetischen Achsen bei m = 6 gemäß FIG 2 weist einen Achsenwinkel $\alpha = \dfrac{\pi}{m}$ auf.

Wenn z.B. eine Strangschaltung bei unveränderter Netzspannung und einer Drehzahl $n \approx \dfrac{1}{2} n_N$ durch Stromführung aller Schaltelemente S1,S2,S3 und Sperren der Halbbrücken W12,W21,W32,W41, W52 und W61 die Bildung neuer wirksamer Wicklungsstränge mit der Strangzahl m* = 3, erfolgt, ergeben sich gemäß FIG 3 die vergrößerten Achsenwinkel $\alpha^* = \dfrac{\pi}{m^*}$.

Die Ströme in den drei wirksamen neuen Strängen verschieben sich um den Winkel $\phi$ gegen die vorherige mangetische Achse der ursprünglichen Stränge, wobei die Beziehung gilt $\phi = (q^* - 1)\dfrac{\pi}{2m^* q^*}$.

Die Einstellung der Wellenform des Stromes wird durch einen Stromregler C1 gesteuert. Durch entsprechendes Ansteuern der Halbbrücken W11 bis W62 kann die Wellenform des Stromes rechteck-, trapez- oder sinusförmig eingestellt werden.

In FIG 4 ist ein Schaltbild eines Kupplungssteuergerätes C2 dargestellt. Dieses Steuergerät C2 enthält einen Komparator K, dessen einem Eingang der Drehzahl-Istwert $n_{ist}$ der Maschine und dessen anderem Eingang ein Drehzahl-Sollwert $n_{soll}$ zugeführt ist. Durch den Drehzahl-Sollwert $n_{soll}$ wird eine Solldrehzahl vorgegeben, bei der eine Umschaltung der Schaltelemente S1,S2, S3 erfolgen soll.

Dem Komparator K sind ein erstes und zweites Zeitglied T1 und T2 nachgeschaltet. Gegebenenfalls kann auch noch ein drittes Zeitglied T3 vorgesehen sein, wie dies gestrichelt angedeutet ist. Außerdem ist eine ODER-Stufe 18 vorgesehen, deren einem Eingang das Komparator-Signal Z und deren anderem Eingang das Ausgangssignal des zweiten Zeitgliedes T2 zugeführt ist.

Das Kupplungssteuergerät C2 arbeitet wie folgt: Bei jedem Über- oder Unterschreiten des Drehzahlsollwertes $n_{soll}$ durch den Drehzahl-Istwert $n_{ist}$ erfolgt ein Wechsel des Komparator-Signales Z. Wechselt das Komparator-Signal Z beispielsweise von "low" auf "high", dann wird dadurch das erste Zeitglied T1 angesteuert, welches nach seiner eingestellten Verzögerungszeit ein Steuersignal abgibt, durch das das betreffende Schaltelement S1 bzw.S2 bzw.S3 in seinen leitenden Zustand geschaltet wird. Das zweite Zeitglied T2 sperrt beim Zustand "high" des Signales Z entsprechend seiner eingestellten Verzögerungszeit die Steuerimpulse für die an seine Ausgänge 11 und 14 angeschlossenen Halbbrücken W11 und W22 bzw. W31 und W42 bzw. W51 und W62. Die Verzögerungszeit des zweiten Zeitgliedes T2 ist größer als die Summe der Berzögerungszeit des ersten Zeitgliedes T1 und der Schaltzeit des betreffenden Schaltelementes S1 bzw. S2 bzw.S3 gewählt. Damit ist sichergestellt, daß die Schaltelemente S1,S2,S3 stromlos schalten. Nach Ablauf der am zweiten Zeitglied T2 eingestellten Verzögerungszeit wird die Sperre der Steuerimpulse aufgehoben und die mit den Ausgängen 11 und 14 verbundenen Halbbrücken werden wieder durchgesteuert.

Durch die ODER-Stufe 18 werden für die Zeit, in der das Signal Z des Komparators K den Zustand "high" aufweist bzw. am Ausgang des zweiten Zeitgliedes T2 ein Sperrsignal ansteht, die an die Ausgänge 12 und 13 der ODER-Stufe 18 angschlossenen Halbbrücken W12 und W21 bzw.W32 und W41 bzw.W52 und W61 gesperrt. Damit erfolgt beim Zustand "high" des Signales Z des Komparators K eine Reihenschaltung der Wicklungsstränge I und II bzw.III und IV bzw.V und VI.

Wechselt das Signal Z in den Zustand "low", dann wird über das erste Zeitglied T1 das betreffende Schaltelement S1 bzw.S2 bzw. S3 wieder verzögert in seinen nichtleitenden Zustand geschaltet, wobei durch das zweite Zeitglied T2 und die ODER-Stufe 18 die Halbbrücken W11 bis W61 während des Schaltens der Schaltelemente S1,S2,S3 gesperrt bzw. im gesperrten Zustand gehalten werden, so daß die Schaltelemente S1,S2,S3 wiederum stromlos schalten. Danach werden sowohl durch das zweite Zeitglied T2 als auch durch die ODER-Stufe 18 die Sperrimpulse für die an deren Ausgänge 11 und 14 bzw.12 und 13 angeschlossenen Halbbrücken W11 bis W62 aufgehoben, so daß alle Halbbrücken wieder durchgesteuert werden. Damit sind alle Wicklungsstränge I bis VI parallel geschaltet.

Zur Vermeidung von momentenfreien Zwischenzeiten können die einzelnen Kupplungssteuergeräte C2 auch in Abhängigkeit voneinander gesteuert werden, so daß die Schaltelemente S1,S2,S3 und die Halbbrücken W11 bis W62 auch entsprechend zeitlich nacheinander angesteuert werden. Eine solche abhängige Steuerung der Kupplungsgeräte C2 ist über das dritte Zeitglied T3 möglich. Das an dessen Ausgang 15 erscheinende Signal wird dem Eingang 16 des nächstfolgenden Kupplungssteuergerätes C2 zugeführt. Durch dieses Signal wird eine Stufe 17 angesteuert, die damit das von dem Komparator K kommende Signal Z erst beim Erscheinen eines Signals am Ausgang 15 des dritten Zeitgliedes T3 des vorhergehenden Kupplungssteuergerätes C2 freigibt. Damit ist ein zeitliches Nacheinanderschalten der Schaltelemente S1, S2,S3 erreicht.

**Patentansprüche**

1. Pulsumrichtergespeiste Drehfeldmaschine mit Wicklungssträngen unterschiedlicher Phase, einer ständerseitigen, teilbaren Wicklungsstrangzahl m = 4,6,8,9 ... (außer Primzahlen), einer beliebigen Lochzahl q und beliebigem Feldverlauf im Luftspalt, **dadurch gekennzeichnet**, daß jede Vollbrücke des Umrichters aus zwei Halbbrücken (W11, W12; W21, W22; ...) besteht, die jeweils wenigstens zwei in Reihe liegende Halbleiterschalter umfassen, die über einen gemeinsamen Abgriff an jeweils einem Wicklungsende des betreffenden Wicklungsstanges (I, II, III, IV, ...) angeschlossen sind, wobei der Strom in jeder Halbwelle auf einen für die zulässige Belastung des Umrichters angepaßten Maximalwert begrenzt und der zeitliche Stromverlauf entsprechend dem jeweiligen Drehmoment der Maschine zwischen Rechteck- oder Sinusform regelbar ist und/oder mindestens eine Teilanzahl benachbarter Wicklungsstränge (I, II, III, IV...) im Hinblick auf die jeweils geforderte Drehzahl der Maschine derart in Reihe schaltbar ist, daß das Produkt m . q = m* . q* konstant bleibt, wobei q* die sich bei neuer wirksamer Strangzahl m* ergebende vervielfachte Lochzahl bedeutet.

2. Drehfeldmaschine nach Anspruch 1,
**dadurch gekennzeichnet,**
daß zum Schalten der Umrichter verlustarme bistabile Schaltelemente vorgesehen sind.

**Claims**

1. A polyphase machine fed by pulse-controlled a.c. converters with phase windings of differing phase, a stator-side, divisible number of phase windings m = 4,6,8,9...(excluding prime numbers), an arbitrary number of slots q and an arbitrary field pattern in the air gap, characterised in that each full bridge of the a.c. converter consists of two half-bridges (W11, W12; W21, W22;...) which in each case comprise at least two series-connected semiconductor switches which are connected via a common tapping in each case to one winding end of the respective phase winding (I, II, III, IV,...), where the current in each half-wave is limited to a maximum value adapted for the permissible load capacity of the a.c. converter and the current waveform over time can be regulated, in accordance with the respective torque of the machine, between rectangular- or sinusoidal form and/or at least a partial number of adjacent phase windings (I, II, III, IV...) can be connected in series with regard to the respective required speed of the machine, in such manner that the product m . q = m*.q* remains constant, where q* is the multiplied number of slots occurring with a new effective phase number m*.

2. Polyphase machine according to claim 1, characterised in that low-loss, bistable switching elements are provided for the switching of the a.c. converters.

**Revendications**

1. Machine à champ tournant alimentée par des convertisseurs d'impulsions et comportant des branches d'enroulement ayant des phases différentes, un nombre divisible de branches d'enroulement côté stator m = 4, 6, 8, 9, ... (à l'exclusion de nombres premiers), un nombre quelconque de trous q et une variation quelconque du champ dans l'entrefer, caractérisée par le fait que chaque pont complet du convertisseur est constitué de deux demi-ponts (W11, W12; W21, W22; ...), qui comprennent chacun au moins deux interrupteurs à semiconducteurs branchés en série et qui sont raccordés par l'intermédiaire d'une prise commune à respectivement une extrémité d'enroulement de la branche d'enroulement considérée (I,II,III,IV, ...), le courant dans chaque alternance étant limité à une valeur maximale adaptée pour la charge admissible du convertisseur, tandis que la variation du courant dans le temps est réglable entre une forme rectangulaire et une forme sinusoïdale conformément au couple respectif de la machine et/ou au moins un nombre partiel de branches d'enroulement voisines (I, II, III, IV...) peuvent être raccordés en série en rapport avec la vitesse de rotation respectivement requise de la machine de manière que le produit m.q = m*.q* reste constant, q* désignant le nombre multiplié de trous, que l'on obtient pour un nouveau nombre de branches actives m*.

2.  Machine à champ tournant suivant la revendication 1, caractérisée par le fait que des éléments de commutation bistables présentant de faibles pertes sont prévues pour la commutation des convertisseurs.

FIG 1

FIG 2

FIG 3

FIG 4